# EUROPEAN PATENT APPLICATION

(11) **EP 0 553 957 A2**
(43) Date of publication of application: **04.08.1993**
(21) Application number: 93300152.1
(22) Date of filing: 11.01.1993
(51) Int. Cl.: C09D 157/04, C08F 222/00, C08F 220/54

(54) **Solvent resistant latex paint**

(30) Priority: 31.01.1992 US 830319
(71) Applicant: ROHM AND HAAS COMPANY, Philadelphia Pennsylvania 19105 (US)
(72) Inventor: McGee, Dennis Emmett, Penfield, New York 14526 (US)
(74) Representative: Angell, David Whilton

(57) **Abstract**

A binder for latex paints utilizes a surfactant-free aqueous copolymer latex prepared by the copolymerization of a mixture of hydrophobic and hydrophilic comonomers. Use of the surfactantless latex-containing binder results in latex paints having greatly enhanced resistance to organic solvents and greatly improved adhesion to substrates.

## Description

### Field of the Invention

This invention relates to latex paints. In one of its more particular aspects, it relates to enhancing the solvent resistance of latex paints.

### Background of the Invention

Latex paints are a mixture of a multitude of ingredients, typically including materials which function as some or all of the following: coalescing aids, thickening aids, dispersing aids, defoamers, biocides, fillers, pigments, and binders. Other ingredients are sometimes employed in formulating latex paints to enhance specific properties of paints intended for specialized uses. For example, cross-linking agents may be employed to improve the solvent resistance of paints and wet adhesion promoters to enhance a paint's adherence to a particular substrate. Since the employment of additional ingredients in latex paints may adversely affect other properties of the paint or make it more difficult to formulate, it would be desirable to provide a latex paint having excellent solvent resistance and adhesion without having to incorporate a cross-linking agent or a wet adhesion promoter into the paint.

### Summary of the Invention

In accordance with the present invention, the properties of solvent resistance and improved adhesion are imparted to a latex paint by the incorporation of a binder comprising a surfactant-free aqueous copolymer latex. The resulting latex paint is characterized by greatly enhanced resistance to organic solvents and greatly improved adherence to substrates upon which the paint is coated.

### Detailed Description of the Invention

The binder used in the latex paint of the present invention comprises a surfactant-free aqueous copolymer latex prepared by the copolymerization of a mixture of hydrophobic and hydrophilic comonomers in an aqueous medium in which no surfactant is present. The aqueous medium in which the copolymerization is conducted, which is characterized by the absence of a surfactant, is unique because a surfactant is usually required in the preparation of aqueous copolymer latexes. The copolymer latexes of the present invention will therefore be referred to herein as "surfactantless latexes".

Copolymer latexes are usually prepared by copolymerizing a mixture of comonomers in an aqueous medium which contains a surfactant. The presence of a surfactant ensures that the product of copolymerization is suspended in the aqueous medium. The surfactantless latexes of the present invention require no surfactant because the copolymerization of certain combinations of hydrophobic and hydrophilic comonomers results in copolymers having a blend of hydrophilic and hydrophobic properties, which maintain the copolymer in suspension in the aqueous medium to provide a latex. The resulting copolymer surprisingly remains suspended in the aqueous polymerization medium without the need for any surfactant or other suspending aid.

The surfactantless latex of the present invention is prepared by the copolymerization of a mixture containing at least one hydrophobic comonomer and at least two hydrophilic comonomers.

The hydrophobic comonomer, which is preferably water insoluble, contributes hydrophobic properties to the surfactantless latex. The hydrophobic comonomer may be selected from C₁ to C₄ alkyl esters of acrylic and methacrylic acids and vinylidene halides. Preferred hydrophobic comonomers are butyl acrylate, methyl methacrylate, and vinylidene chloride.

The first of the hydrophilic comonomers is a water soluble unsaturated monocarboxylic or polycarboxylic acid. The first hydrophilic comonomer contains at least one olefinically unsaturated linkage and at least one carboxyl group and has the general formula: 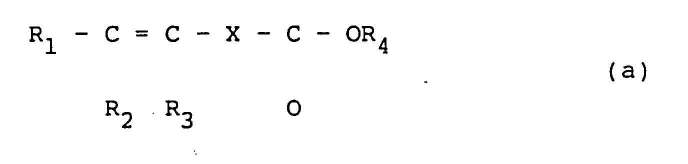
wherein R₁, R₂, and R₃ are independently hydrogen, halogen, nitro, amino, and organic radicals, usually of no more than 10 carbon atoms; R₄ is hydrogen or an organic radical, usually containing no more than about 10 carbon atoms; and X is a covalent bond or an organic radical, usually of no more than about 10 carbon atoms. Normally, the number of all the carbon atoms in comonomer (a) is no greater than 30. Since comonomer (a) contains at least one carboxyl group, at least one of R₁, R₂, and R₃ must contain a carboxyl group when R₄ is other than hydrogen or an organic radical containing a carboxyl group.

The term "organic" radical, when used herein, broadly refers to any carbon-containing radical. Such radicals may be cyclic or acyclic, may have straight or branched chains, and can contain one or more hetero atoms such as sulfur, nitrogen, oxygen, phosphorus, and the like. Further, they may be substituted with one or more substituents such as thio, hydroxy, nitro, amino, cyano, carboxyl, carboxylate, or halogen. In addition to aliphatic chains, they may contain aryl radicals, including arylalkyl and alkylaryl radicals; and cycloalkyl radicals, including alkyl-substituted cycloalkyl and cycloalkyl-substituted alkyl radicals, with such radicals, if desired, being substituted with any of the substituents listed above. When cyclic radicals are present, whether aromatic or nonaromatic, it is preferred that they have only one ring. Preferred organic radicals are, in general, free of olefinic and acetylenic linkages and are also free of aromatic radicals.

The term "water soluble" shall denote a solubility in an amount of at least 2.5 percent by weight in deionized water at a temperature of about 90°C. Preferably the hydrophilic comonomers are soluble in water to the extent of at least 5 percent, and most preferably at least 15 percent by weight.

In comonomer (a), it is preferred that R₁, R₂, and R₃ be hydrogen or unsubstituted cycloalkyl or unsubstituted straight or branched chain alkyl radicals which have no more than 7 carbon atoms, with the exception that at least one of R₁, R₂, and R₃ may either be or bear a group, 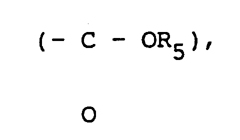
wherein R₅ is hydrogen or an organic radical, usually having no more than about 10 carbon atoms. In any event, compound (a) must contain at least one carboxyl group.

More preferably, R₁, R₂, and R₃, individually, are, or bear a carboxyl group or a carboxylate group of no more than 5 carbon atoms or are individually hydrogen or unsubstituted straight or branched chain alkyl radicals of no more than 5 carbon atoms. When X is an organic radical, it preferably has no more than 6 carbon atoms and is an unsubstituted branched or unbranched chain alkyl or unsubstituted cycloalkyl radical and, when an alkyl radical, is most preferably unbranched.

In the most preferred form of all, comonomer (a) is a dicarboxylic acid wherein R₁, R₂, and R₃ are all independently hydrogen, carboxyl groups, or methyl or ethyl radicals, either unsubstituted or substituted with a carboxyl group, provided that R₁, R₂, and R₃ comprise, in total, (1) one carboxyl group when R₄ is hydrogen or an organic radical containing a carboxyl group or (2) two carboxyl groups when R₄ is other than hydrogen or an organic radical containing a carboxyl group. Most preferred for R₄ and R₅ are hydrogen or unsubstituted alkyl radicals or unsubstituted cycloalkyl radicals. Most preferred for X is a covalent bond.

In particular regard to the most preferred embodiment of comonomer (a), it is preferred that, except for the carboxyl and carboxylate groups, the remainder of the compound be unsubstituted, that is, consist of only carbon and hydrogen atoms, and that the maximum number of carbon atoms in the compound be 27, with R₁ and R₂ combined having no more than 9 carbon atoms, and R₃ no more than 8 carbon atoms, with R₄ and R₅ each having no more than 7 carbon atoms. In the very most preferred embodiment, each side of the olefinic linkage has no more than about 5 carbon atoms, and both of R₄ and R₅ are hydrogen.

Preferred copolymerizable, hydrophilic comonomers (a) according to the above description include monoolefinically unsaturated monocarboxylic acids, such as acrylic acid and methacrylic acid and monoolefinically unsaturated dicarboxylic acids, such as methylenesuccinic acid (itaconic acid), the cis- and trans- forms of butenedioic acid (maleic and fumaric acids), both the cis- and trans- forms (where such exist) of the diacids resulting when one or more of the hydrogen atoms on the carbon chains of maleic/fumaric acid or itaconic acid is replaced with a methyl or ethyl radical, and the C₁ to C₅ semi-esters thereof. Of these, acrylic acid, methacrylic acid, and itaconic acid are most preferred.

The other hydrophilic comonomers are either water soluble hydroxy esters or water soluble amides.

The hydroxy ester comonomers comprise one or more compounds different from compound (a) having the general formula: 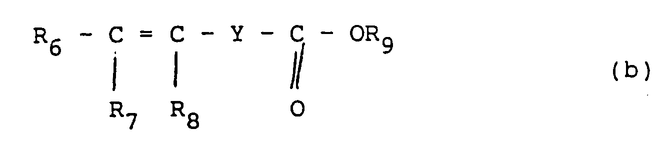
wherein R₆, R₇ and R₈ are independently selected from hydrogen, halogen, nitro, amino, and organic radicals, usually of no more than 10 carbon atoms; R₉ is an organic radical having at least 2, and usually no more than 10, carbon atoms, with at least one of R₆, R₇, R₈, and R₉ being an organic radical having a hydroxyl substituent thereon, said hydroxyl substituent being at least 2 carbon atoms away from the closest carboxylate group. Where one or more of R₆, R₇, and R₈ are organic radicals having a hydroxyl substituent, R₉ is preferably an unsubstituted hydrocarbyl radical, usually of no more than 10 carbon atoms. Y is a covalent bond or an organic radical, usually of no more than about 10 carbon atoms.

For compound (b), it is preferred that R₆, R₇, and R₈ be free of hydroxyl and carboxylate substituents and, even more preferably, that they be hydrogen or unsubstituted cycloalkyl or unsubstituted straight or branched chain alkyl groups which have no more than 7 carbon atoms. Most preferably, R₆, R₇, and R₈ are hydrogen or unsubstituted straight or branched chain alkyl groups having no more than 5 carbon atoms. In the very most preferred form of all, R₆, R₇, and R₈ are all independently ethyl, methyl, or hydrogen. R₉ is also preferably free of carboxylate groups and is most preferably an alkyl or cycloalkyl group, substituted at least 2 carbon atoms away from any carboxylate group with a hydroxyl group. When Y is an organic radical, it is preferably a branched or unbranched unsubstituted alkyl or unsubstituted cycloalkyl group with no more than about 6 carbon atoms and, when an alkyl group, is preferably unbranched. However, most preferred for Y is a covalent bond.

Preferred compounds according to the above description for compound (b) are the hydroxy alkyl and hydroxy cycloalkyl esters of acrylic and methacrylic acids, and while the esterifying moiety must have at least 2 carbon atoms, it preferably has no more than about 6, and, more preferably, no more than about 4 carbon atoms. Of the hydroxy alkyl and hydroxy cycloalkyl esters of acrylic and methacrylic acids meeting these criteria, 2-hydroxyethyl acrylate and hydroxypropyl methacrylate are most preferred.

The amide comonomers comprise one or more water soluble compounds having the general formula: 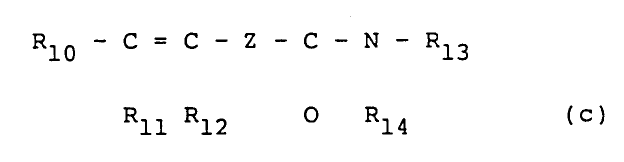
wherein R₁₀, R₁₁, and R₁₂ are independently selected from hydrogen, halogen, nitro, amino, and organic radicals; R₁₃ and R₁₄ are hydrogen or organic radicals having no more than 6 carbon atoms; and Z is a covalent bond or an organic radical, usually of no more than about 10 carbon atoms.

For compound (c), it is preferred that R₁₀, R₁₁, and R₁₂ be free of carboxylate substituents and, even more preferably, that they be hydrogen or unsubstituted cycloalkyl or unsubstituted straight or branched chain alkyl groups which have no more than 7 carbon atoms. Most preferably, R₁₀, R₁₁, and R₁₂ are hydrogen or straight or branched chain unsubstituted alkyl groups having no more than 5 carbon atoms. In the very most preferred form of all, R₁₀, R₁₁, and R₁₂ are all independently ethyl, methyl, or hydrogen. Preferred for R₁₃ and R₁₄ are hydrogen or unsubstituted branched or unbranched alkyl or unsubstituted cycloalkyl groups, each having no more than 6 carbon atoms, provided that at least one of R₁₃ and R₁₄ is hydrogen. When Z is an organic radical, it is preferably an unsubstituted branched or unbranched alkyl or cycloalkyl group with no more than about 6 carbon atoms and, when an alkyl group, is more preferably unbranched. However, most preferred for Z is a covalent bond.

Preferred compounds according to the above description for formula (c) are the primary and secondary amides of acrylic and methacrylic acid, with R₁₃ being hydrogen and R₁₄ being either hydrogen, methyl, or ethyl. Of the amides meeting these criteria, acrylamide is most preferred.

The copolymerization is conducted with a mixture of comonomers in which the hydrophobic comonomer or comonomers is usually present in a proportion of about 30% to 80% and preferably about 50% to 75%, by weight of total monomers, with the hydrophilic comonomers being usually present in a proportion of about 20% to 70% and preferably about 25% to 50%, by weight of total monomers.

In general, with respect to the hydrophilic comonomers, a large proportion of comonomer (a) is present in the mixture of comonomers compared to either comonomer (b) or comonomer (c). Typically, the hydrophilic comonomers comprise about 40% to 60% of comonomer (a) with the balance comprising comonomer (b) or comonomer (c) or a mixture of comonomers (b) and (c).

Where all of comonomers (a), (b), and (c) are present together as the hydrophilic comonomers, the carboxylic acid hydroxy ester and amide can be used in any desired proportions. However, substantially equal weight proportions of hydroxy ester and amide have been found to be particularly effective in producing the combination of enhanced adhesion and solvent resistance desired in the paint binders of this invention. Preferably, the mixture of hydrophilic comonomers comprises between about 20 percent and 30 percent of each of comonomers (b) and (c) and about 40 percent to 60 percent of comonomer (a). More preferably, the mixture comprises between about 25% and 27% of each of comonomers (b) and (c) and about 46% to 50% of comonomer (a).

Surfactantless latexes can be prepared by free-radical initiated emulsion polymerization methods using either thermal or redox techniques, but without using any surfactant. Further, the reaction may be conducted by batch, semibatch, or continuous procedures, which are well known for use in conventional polymerization reactions. Illustrative procedures suitable for producing aqueous copolymer latexes typically involve gradually adding simultaneously the comonomers to be copolymerized to an aqueous reaction medium at rates proportional to the respective percentage of each comonomer in the finished copolymer and initiating and continuing said copolymerization with a suitable polymerization catalyst. Optionally, one or more of the comonomers can be added disproportionately throughout the polymerization so that the copolymer formed during the initial stages of copolymerization will have a composition differing from that formed during the intermediate and later stages of the same copolymerization.

Illustrative water-soluble, free-radical initiators are hydrogen peroxide and an alkali metal (sodium, potassium, or lithium) persulfate or ammonium persulfate, or a mixture of such an initiator in combination with a reducing agent activator, such as a sulfite, more specifically an alkali metabisulfite, hyposulfite or hydrosulfite, glucose, ascorbic acid, erythorbic acid or other reducing agent, to form a "redox" system. Normally the amount of initiator used ranges from about 0.01 percent to 5 percent, by weight, based on the comonomer charge. In a redox system, a corresponding range (about 0.01 to 5 percent) of reducing agent is normally used.

The copolymerization, once started, is continued, with agitation, at a temperature sufficient to maintain an adequate reaction rate until most, or all, of the comonomers are consumed and until the reaction medium reaches a polymer solids concentration between about 5 percent and 40 percent, by weight. Reaction temperatures in the range of about 10°C to 100°C will yield satisfactory polymeric compositions. When persulfate systems are used, the temperature is normally in the range of about 60°C to 100°C, while in redox systems the temperature is normally in the range of about 10°C to 70°C and preferably about 30°C to 60°C. At this point, the latex normally will have a viscosity in the range between about 10 cps and 1000 cps at a solids content of 15 percent at pH 3.

Another method for preparation of the surfactantless latexes of the present invention involves copolymerizing the desired mixture of comonomers in the presence of an aqueous solution copolymer, such as a copolymer of itaconic acid, 2-hydroxyethyl acrylate, and acrylamide. Such solution copolymers are described in U.S. Patent No. 4,939,200, assigned to the same assignee as the present invention, the disclosure of which in its entirety is incorporated herein by reference.

In general, the surfactantless latex is used in paint binders, particularly in binders for latex paints, in an amount of about 2 percent to 20 percent by weight, on a dry weight basis, that is, a polymer to polymer basis, of the polymers present in the binder. Preferably, the surfactantless latex is present in an amount of about 5 percent to 10 percent, by weight of total polymers. The desired amount of surfactantless latex is added to the polymer or mixture of copolymers constituting the balance of the binder formulation, and the pH of the resulting blend is adjusted to about pH 5 to pH 9 prior to mixing with the other ingredients of the paint.

Copolymers prepared by the emulsion polymerization of a mixture of copolymerizable olefinically unsaturated comonomers in the presence of a surfactant can be mixed with the surfactantless latexes of the present invention. Such comonomers as the C₁ to C₈ saturated esters of acrylic acid, the C₁ to C₈ saturated esters of methacrylic acid, vinylidene halides, vinyl chloride, vinyl acetate, styrene, and other vinyl compounds can be used to prepare the polymers which are mixed with the surfactantless latexes of the present invention to form a paint binder.

Latex paints are generally formulated with a coalescing aid, a thickening aid, a dispersing aid, a defoamer, a biocide, a filler, and a pigment in addition to the binder described above. Coalescing aids, thickening aids, dispersing aids, defoamers, biocides, fillers, and pigments suitable for use in latex paints are well known to those skilled in the art.

Latex paints formulated using the above-described surfactantless latex-containing binder are characterized by greatly enhanced resistance to organic solvents and greatly improved adhesion to a variety of substrates. For example, whereas test panels painted with a conventional latex paint displayed a total lifting of the paint from the panel after as little as 10 to 15 minutes soaking in toluene, latex paints incorporating the binders of the present invention displayed no coating lift after as much as 3 hours soaking in toluene. The paint adheres to its substrate to such an extent that the coating can be abraded, such as by rubbing with a paper towel, without damaging the coating. Furthermore, the coating is effective to protect metal substrates from corrosion in the vicinity of a scribe or other physically produced defect. Even if the paint coating is softened by exposure to an organic solvent, such as toluene, and then scratched to produce a defect, the adherence of the paint is so markedly improved by incorporation of a surfactantless latex-containing binder in accordance with the present invention, that upon removal from the solvent and drying, the paint will regain its toughness and become effective to protect the substrate upon which it is coated.

The invention will be better understood by reference to the following examples which are intended to illustrate the invention without limiting the scope thereof, which is defined in the appended claims.

The following example illustrates the preparation of a surfactantless latex comprised of butyl acrylate, itaconic acid, 2-hydroxyethyl acrylate, and acrylamide.

### EXAMPLE 1

A mixture of 22 grams itaconic acid, 11 grams 2-hydroxyethyl acrylate, 11 grams acrylamide, and 494 grams of deionized water was charged to a reactor and heated to a temperature of 175°F, after which a solution of an initiator, 0.6 gram of ammonium persulfate dissolved in 6 grams of deionized water, was added. After 30 minutes butyl acrylate was added at the rate of 10 ml. per hour until a total of 44 grams butyl acrylate had been added. The temperature was maintained at 175°F. After 3 hours a second equal portion of ammonium persulfate was bombed into the reactor and the temperature was maintained at 175°F. for another 3 hours. The resulting copolymer latex was then cooled. The latex at pH 3.8 had a viscosity of 6 cps at 14.4% solids, a surface tension of 50.2 dynes/cm., and a particle size of 905 nm. (hydrodynamic diameter as measured on a Brookhaven Instrument Corporation BI-90 Particle Size Analyzer).

The following example illustrates a paint prepared with a binder comprising a polyvinylidene chloride emulsion copolymer and the surfactantless latex of Example 1.

### EXAMPLE 2

A latex paint was formulated with a mixture of a polyvinylidene chloride copolymer emulsion wherein the polymer comprised 90.5 parts vinylidene chloride, 8 parts methyl methacrylate, 0.5 part methyl acrylate, 0.5 part butyl acrylate, and 0.5 part acrylic acid at pH 4 and 55% total solids, and an amount of the surfactantless latex of Example 1 in relative proportions such that the polymer of the surfactantless latex constituted 10% by weight of the total polymers. A comparison latex paint was formulated using the polyvinylidene chloride emulsion copolymer alone.

The latex paints were formulated as shown in Table 1.

**TABLE 1**

| | |
|---|---|
| Latex (pH 4.0-5.0) | 135.0g |
| Methyl Carbitol | 3.0g |
| Pigment Paste (Table 2) | 10.9g |
| R&H QR708 | 1.3g |

**TABLE 2**

| | |
|---|---|
| Water | 54.1g |
| Butyl Cellosolve | 27.0g |
| Ammonium Hydroxide | 1.1g |
| R&H Tamol 731 | 11.0g |
| Nopco 8034 | 2.2g |
| Heucophos ZMP | 82.9g |
| Red Iron Oxide | 59.7g |
| Mistron Maximix-6 (Cyprus) | 50.0g |
| Calcium Carbonate | 100.0g |
| Attagel 40 | 1.0g |

Steel panels were coated with either of the paints within 24 hours of paint formulation and then dried for 4 days. The panels were then scribed with a sharp tool and soaked in toluene for 15 minutes. The paints on the panels coated with paints containing only the polyvinylidene chloride emulsion copolymer without the surfactantless latex lifted completely from the panels. In the case of the paints containing both the polyvinylidene chloride emulsion copolymer and the surfactantless latex, in accordance with the present invention, no paint lifted from the panels after soaking in toluene for 3 hours. After 24 hours the coating still maintained its integrity, although there was some blistering of the coating in areas immediately adjacent to the scribes.

Similar results were obtained in the paint formulation of Example 2 using a surfactantless latex which contained, by weight of total monomers, 33.33% butyl acrylate, 33.33% itaconic acid, 16.67% 2-hydroxyethyl acrylate, and 16.67% acrylamide prepared as described in Example 1.

The following example illustrates the preparation of a surfactantless latex comprised of vinylidene chloride, itaconic acid, acrylic acid, and 2-hydroxyethyl acrylate.

### EXAMPLE 3

A mixture of 55 grams itaconic acid, 27.5 grams 2-hydroxyethyl acrylate, 27.5 grams acrylic acid, 330 grams vinylidene chloride, and 2470 grams of deionized water was charged to a three-gallon glass-lined fiber reactor and heated to a temperature of 184° F., after which a solution of an initiator, 4.4 grams of ammonium persulfate dissolved in 39.8 grams of deionized water, was added. The temperature was maintained at 184° F. After 2.5 hours a second equal portion of ammonium persulfate was bombed into the reactor and the temperature was maintained at 184° F. for another 2.5 hours. The resulting copolymer latex was then cooled. The latex had a viscosity of 4 cps at 13.7% solids and a particle size of 201 nm.

Other surfactantless latexes prepared in accordance with Example 3 contained the mixtures of comonomers shown in Table 3.

**TABLE 3**

| Comonomer | % By Weight of Total Monomers | | |
|---|---|---|---|
| Vinylidene Chloride | 66.67 | 50 | 33.33 |
| Itaconic Acid | 16.67 | 25 | 33.33 |
| 2-Hydroxyethyl Acrylate | 8.33 | 12.5 | 16.67 |
| Acrylamide | 8.33 | 12.5 | 16.67 |

The following example illustrates the preparation of a surfactantless latex utilizing a pre-formed solution copolymer and a mixture of comonomers.

### Example 4

A mixture of 200 grams of a solution of a copolymer containing 50% itaconic acid, 25% 2-hydroxyethyl acrylate, and 25% acrylamide (15.1% solids) was heated to 115° F. along with 2 grams ammonium persulfate. After 1 minute a mixture of 90 grams vinylidene chloride, 9 grams methyl methacrylate, and 1 gram acrylic acid was added continuously over a 5 hour period. An activator (2 grams sodium metabisulfite in 50 grams water) was added over a 6 hour period and at the rate of 2-3 ml. per 15 minutes. The temperature was maintained at 120° F. over the 6 hour period. The resulting copolymer latex was then cooled. The latex, which had a monomer composition of 69.2% vinylidene chloride, 6.9% methyl methacrylate, 11.5% itaconic acid, 0.8% acrylic acid, 5.75% 2-hydroxyethyl acrylate, and 5.75% acrylamide, had a viscosity of 24 cps at 36.9% solids, a surface tension of 70.9 dynes/cm., and a particle size of 282 nm determined as in Example 1, at pH 3.17.

This invention may be embodied in other forms without departing from the spirit or essential characteristics thereof. For example, it is recognized that, while the description of the present invention and the preferred embodiments thereof are directed toward certain specific mixtures of comonomers, other comonomers and other mixtures of comonomers can be used as well. Consequently, the present embodiments and examples are to be considered only as being illustrative and are not restrictive, with the scope of the invention being indicated by the appended claims. All embodiments which come within the scope and equivalency of the claims are, therefore, intended to be embraced therein.

The present invention therefore relates to the subject-matter stated in the following numbered paragraphs.
1. A surfactantless latex comprising the product of copolymerization, in aqueous medium, in the absence of any surfactant, of a mixture comprising:
   1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 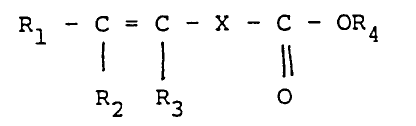 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
   (3) a member selected from the group consisting of:
      (a) one or more water soluble hydroxy esters, different from said carboxylic acid comonomer and of the formula: 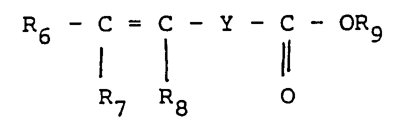 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
      (b) one or more water soluble amides of the formula: 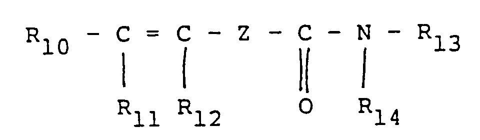 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.
2. A latex according to para 1, wherein all of said organic radicals are free of olefinic and acetylenic linkages.
3. A latex according to para 1, wherein all of said organic radicals contain no more than about 10 carbon atoms.
4. A latex according to para 1 wherein said organic radicals are selected from the group consisting of straight and branched chain alkyl, substituted and unsubstituted aryl, arylalkyl, alkylaryl, cycloalkyl, alkyl-substituted cycloalkyl, and cycloalkyl-substituted alkyl radicals, said radicals having no more than one ring.
5. A latex according to para 1 wherein said mixture comprieses said hydroxy ester, and R₁, R₂, R₃, R₆, R₇, and R₈ are independently hydrogen or unsubstituted cycloalkyl or straight or branched chain alkyl radicals and have no more than about 7 carbon atoms.
6. A latex according to para 1 wherein R₁, R₂, R₃, R₆, R₇, R₈, R₁₀, R₁₁, and R₁₂ are independently ethyl, methyl, or hydrogen.
7. A latex according to para 1 wherein at least one of R₁, R₂ and R₃ either is a 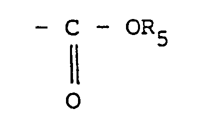 group or bears such a group, wherein R₅ is hydrogen or an organic radical.
8. A latex according to para 7 wherein the maximum number of carbon atoms in said carboxylic acid is 27, with R₁ and R₂ combined having no more than 9 carbon atoms, R₃ having no more than 8 carbon atoms, and R₄ and R₅ each having no more than 7 carbon atoms.
9. A latex according to para 1 wherein said carboxylic acid is selected from the group consisting of the cis- and trans- forms of butenedioic acid, methylenesuccinic acid, the diacids resulting when one or more of the hydrogen atoms on the carbon chains of butenedioic acid or methylenesuccinic acid is replaced with a methyl or ethyl radical, and the C₁ to C₅ semi-esters of said acids.
10. A latex according to para 1 wherein said carboxylic acid is itaconic acid.
11. A latex according to para 1 wherein said mixture comprises said hydroxy ester; R₆, R₇, and R₈ are independently selected from the group consisting of hydrogen, methyl or ethyl; and R₉ is a hydroxyalkyl radical having from 2 to 6 carbon atoms.
12. A latex according to para 11 wherein R₉ has from 2 to 4 carbon atoms and Y is a covalent bond.
13. A latex according to para 1 wherein said mixture comprises said hydroxy ester, and said hydroxy ester comprises a member selected from the group consisting of hydroxy alkyl and hydroxy cycloalkyl esters of acrylic and methacrylic acids.
14. A latex according to para 1 wherein said mixture comprises said hydroxy ester, and said hydroxy ester is a member selected from the group consisting of 2-hydroxyethyl acrylate and hydroxypropyl methacrylate.
15. A latex according to para 1 wherein said mixture comprises said hydroxy ester, and said hydroxy ester is 2-hydroxyethyl acrylate.
16. A latex according to para 1 wherein said mixture comprises said amide, and R₁₀, R₁₁, and R₁₂ are hydrogen or unsubstituted cycloalkyl or unsubstituted straight or branched chain alkyl radicals having no more than 7 carbon atoms.
17. A latex according to para 1 wherein said mixture comprises said amide; R₁₀, R₁₁, R₁₂, and R₁₃ are selected from the group consisting of hydrogen, methyl, and ethyl; and R₁₄ is hydrogen.
18. A latex according to para 1 wherein said mixture comprises said amide, and said amide is a member selected from the group consisting of the primary and secondary amides of acrylic and methacrylic acids.
19. A latex according to para 1 wherein said mixture comprises said amide, and said amide is acrylamide.
20. A latex according to para 1 wherein said carboxylic acid is itaconic acid, said mixture comprises said hydroxy ester and said amide, said hydroxy ester is 2-hydroxyethyl acrylate, and said amide is acrylamide.
21. A latex according to para 1 wherein said one or more hydrophobic comonomers is present in said mixture in a proportion of about 30% to 80% by weight of total monomers.
22. A latex according to para 1 wherein said one or more hydrophobic comonomers is present in said mixture in a proportion of about 50% to 75% by weight of total monomers.
23. A latex according to para 1 wherein said carboxylic acid is present in a proportion of about 40% to 60%, by weight, based upon the weight of said mixture, excluding said one or more hydrophobic comonomers.
24. A latex according to para 1 wherein said carboxylic acid is present in a proportion of about 40% to 60%, said hydroxy ester in a proportion of about 20% to 30%, and said amide in a proportion of about 20% to 30%, by weight, based upon the weight of said mixture, excluding said one or more hydrophobic comonomers.
25. A latex according to para 1 wherein said carboxylic acid comonomer is present in a proportion of about 46% to 50%, said hydroxy ester in a proportion of about 25% to 27%, and said amide in a proportion of about 27% to 25%, by weight, based upon the weight of said mixture, excluding said one or more hydrophobic comonomers.
26. A binder for paints comprising an admixture of a copolymer emulsion and the surfactantless latex of para 1;
   the copolymer of said emulsion being different from the copolymer of said surfactantless latex;
   the copolymer of said surfactantless latex being present in said admixture in an amount of about 2% to 20%, by weight of total polymers.
27. A binder according to para 26 wherein the copolymer of said surfactantless latex is present in said admixture in an amount of about 5% to 10%, by weight of total polymers.
28. A process for preparing a surfactantless latex comprising copolymerizing, in aqueous medium, in the absence of any surfactant, a mixture comprising:
   (1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 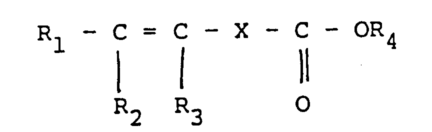 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
   (3) a member selected from the group consisting of:
      (a) one or more water soluble hydroxy esters, different from said carboxylic acid and of the formula: 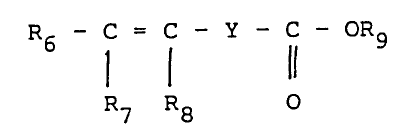 wherein R₆, R₇, and R₈ are independently selected from the group consisting of hydrogen, halogen, nitro, amino, and organic radicals; R₉ is an organic radical having at least 2 carbon atoms; with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
      (b) one or more water soluble amides of the formula: 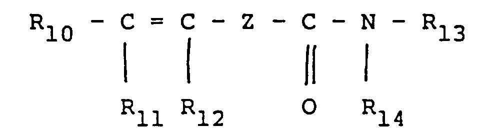 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
         said one or more hydrophobic comonomers being present in said mixture in an amount of about 30% to 80%, by weight of total monomers.
29. A process for preparing a binder for paints comprising:
   (a) copolymerizing, in aqueous medium, in the absence of any surfactant, a mixture comprising:
      (1) one or more hydrophobic comonomers selected from the group consisting of C₁ to C₄ alkyl esters of acrylic acid, C₁ to C₄ alkyl esters of methacrylic acid, and vinylidene halides;
      (2) one or more water soluble carboxylic acids of the formula: 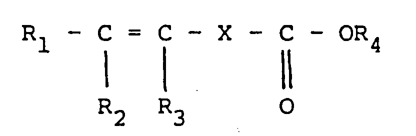 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group;
         and
      (3) a member selected from the group consisting of:
         (i) one or more water soluble hydroxy esters, different from said carboxylic acid and of the formula: 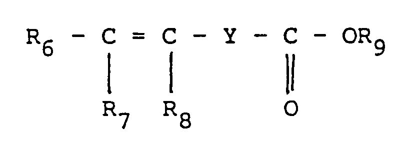 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
         (ii) one or more water soluble amides of the formula: 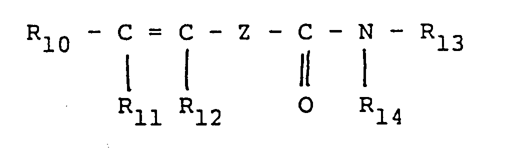 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
   (b) admixing the resulting surfactantless latex with a copolymer emulsion, the copolymer of said emulsion being different from the copolymer of said surfactantless latex, the copolymer of said surfactantless latex being present in the admixture in an amount of about 2% to 20%, by weight of total polymers.
30. A process according to para 29 wherein said mixture comprises said hydroxy ester and said amide, said carboxylic acid is itaconic acid, said hydroxy ester is 2-hydroxyethyl acrylate, and said amide is acrylamide.
31. In a latex paint comprising:
   (a) a coalescing aid,
   (b) a thickening aid,
   (c) a dispersing aid,
   (d) a defoamer,
   (e) a biocide,
   (f) a filler, and
   (g) a binder,
   the improvement wherein said binder comprises the latex of para 1.
32. A film formed by drying the latex paint of para 31.
33. An article comprising a substrate having a surface, wherein at least a portion of the surface is coated with the film of para 32.
34. A surfactantless latex comprising the product of copolymerization, in aqueous medium, in the presence of a pre-formed aqueous solution copolymer, and in the absence of any surfactant, of a mixture comprising:
   (1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 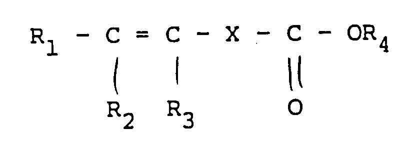 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
   (3) a member selected from the group consisting of:
      (a) one or more water soluble hydroxy esters, different from said carboxylic acid and of the formula: 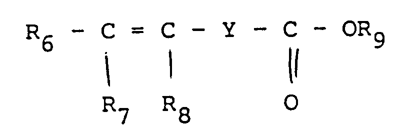 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
      (b) one or more water soluble amides of the formula: 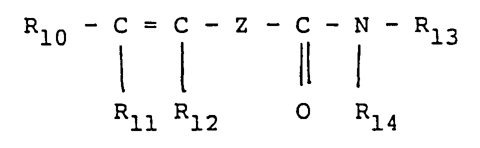 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.
35. A latex according to para 34 wherein said aqueous solution copolymer comprises a copolymer of itaconic acid, 2-hydroxyethyl acrylate, and acrylamide.
36. A binder for paints comprising an admixture of a copolymer emulsion and the surfactantless latex of para 34, the copolymer of said emulsion being different from the copolymer of said surfactantless latex, the copolymer of said surfactantless latex being present in said admixture in an amount of about 2% to 20%, by weight of total polymers.
37. A binder according to para 36 wherein said aqueous solution copolymer comprises a copolymer of itaconic acid, 2-hydroxyethyl acrylate, and acrylamide.
38. A process for preparing a surfactantless latex comprising copolymerizing, in aqueous medium, in the presence of a pre-formed aqueous solution copolymer, and in the absence of any surfactant, a mixture comprising:
   (1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 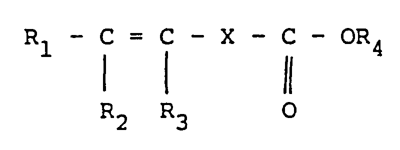 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
   (3) a member selected from the group consisting of:
      (a) one or more water soluble hydroxy esters, different from said carboxylic acid comonomer and of the formula: 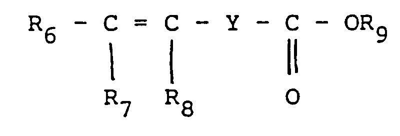 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
      (b) one or more water soluble amides of the formula: 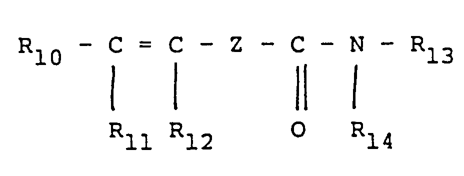 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
         said one or more hydrophobic comonomers being present in said mixture in a proportion of about 30% to 80%, by weight of total monomers.
39. A process according to para 38 wherein said aqueous solution copolymer comprises a copolymer of itaconic acid, 2-hydroxyethyl acrylate, and acrylamide.
40. A process for preparing a binder for paints comprising:
   (a) copolymerizing, in aqueous medium, in the presence of a pre-formed aqueous solution copolymer, and in the absence of any surfactant, a mixture comprising:
      (1) one or more hydrophobic comonomers selected from the group consisting of C₁ to C₄ alkyl esters of acrylic acid, C₁ to C₄ alkyl esters of methacrylic acid, and vinylidene halides;
      (2) one or more water soluble carboxylic acids of the formula: 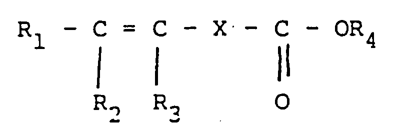 wherein R₁, R₂, and R₃ are independently selected from the group consisting of hydrogen, halogen, nitro, amino, and organic radicals; R₄ is hydrogen or an organic radical; and X is a covalent bond or an organic radical, provided that, where R₄ is other than hydrogen or an organic radical containing a carboxyl group, at least one of R₁, R₂, and R₃ must contain a carboxyl group; and
      (3) a member selected from the group consisting of:
         (i) one or more water soluble hydroxy esters, different from said carboxylic acid and of the formula: 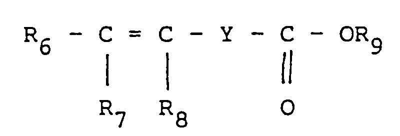 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
         (ii) one or more water soluble amides of the formula: 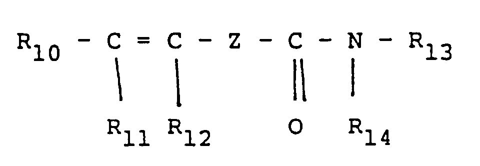 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
   (b) admixing the resulting surfactantless latex with a copolymer emulsion, the copolymer of said emulsion being different from the copolymer of said surfactantless latex, the copolymer of said surfactantless latex being present in the admixture in an amount of about 2% to 20%, by weight of total polymers.
41. A process according to para 40 wherein said mixture comprises said hydroxy ester and said amide, said carboxylic acid is itaconic acid, said hydroxy ester is 2-hydroxyethyl acrylate, and said amide is acrylamide.
42. A process according to para 40 wherein said aqueous solution copolymer comprises a copolymer of itaconic acid, 2-hydroxyethyl acrylate, and acrylamide.
43. In a latex paint comprising:
   (a) a coalescing aid,
   (b) a thickening aid,
   (c) a dispersing aid,
   (d) a defoamer,
   (e) a biocide,
   (f) a filler, and
   (g) a binder,
   the improvement wherein said binder comprises the binder of para 36.
44. A film formed by drying the latex paint of para 43.
45. An article comprising a substrate having a surface, wherein at least a portion of the surface is coated with the film of para 44.
46. A surfactantless latex comprising the product of copolymerization, in aqueous medium, in the absence of any surfactant, of a mixture comprising:
   1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble dicarboxylic acids of the formula: 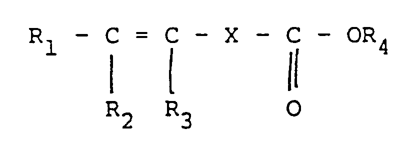 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, one of R₁, R₂, and R₃ must contain a carboxyl group, and, where R₄ is other than hydrogen or an organic radical containing a carboxyl group, two of R₁, R₂, and R₃ must contain carboxyl groups; and
   (3) a member selected from the group consisting of:
      (a) one or more water soluble hydroxy esters, different from said carboxylic acid comonomer and of the formula: 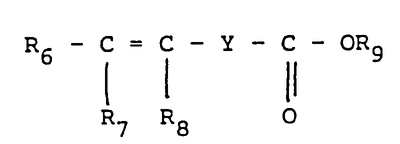 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
      (b) one or more water soluble amides of the formula: 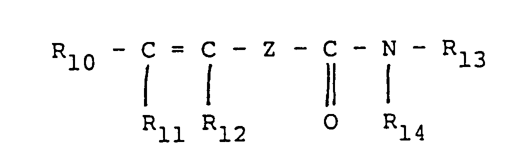 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.
47. A surfactantless latex comprising the product of copolymerization, in aqueous medium, in the absence of any surfactant, of a mixture comprising:
   (1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids selected from the group consisting of acrylic acid, methacrylic acid, itaconic acid, maleic acid, fumaric acid, methyl or ethyl substituted itaconic acids, methyl or ethyl substituted maleic acids, methyl or ethyl substituted fumaric acids, C₁ to C₅ semi-esters of itaconic acid, C₁ to C₅ semi-esters of maleic acid, and C₁ to C₅ semi-esters of fumaric acid; and
   (3) a member selected from the group consisting of:
      (a) one or more water soluble hydroxy esters selected from the group consisting of hydroxy alkyl esters of acrylic acid, hydroxy alkyl esters of methacrylic acid, hydroxy cycloalkyl esters of acrylic acid, and hydroxy cycloalkyl esters of methacrylic acid; and
      (b) one or more water soluble amides selected from the group consisting of acrylamide, methacrylamide, secondary methyl or ethyl amides of acrylic acid, and secondary methyl or ethyl amides of methacrylic acid.
48. A latex according to para 47 wherein said one or more hydrophobic comonomers is water insoluble.
49. A latex according to para 1 wherein said one or more hydrophobic comonomers is water insoluble.
50. A surfactantless latex comprising the product of copolymerization, in aqueous medium, in the absence of any surfactant, of a mixture comprising:
   1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 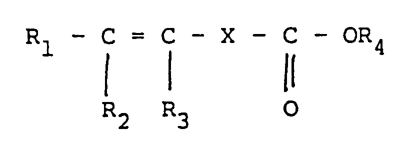 wherein R₁, R₂, and R₃ are independently selected from the group consisting of hydrogen, halogen, nitro, amino, and organic radicals; R₄ is hydrogen or an organic radical; and X is a covalent bond or an organic radical, provided that, where R₄ is other than hydrogen or an organic radical containing a carboxyl group, at least one of R₁, R₂, and R₃ must contain a carboxyl group;
   (3) one or more water soluble hydroxy esters, different from said carboxylic acid and of the formula: 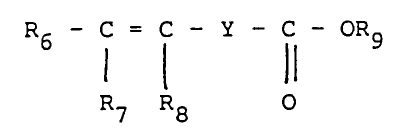 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
   (4) one or more water soluble amides of the formula: 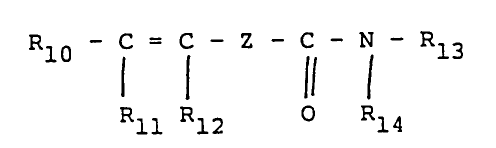 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.
51. A surfactantless latex according to para 1 wherein said one or more hydrophobic comonomers is butyl acrylate.
52. A surfactantless latex according to para 1 wherein said one or more hydrophobic comonomers is vinylidene chloride.
53. A surfactantless latex comprising the product of copolymerization, in aqueous medium, in the absence of any surfactant, of a mixture comprising:
   (1) one or more hydrophobic comonomers selected from the group consisting of C₁ to C₄ alkyl esters of acrylic acid, C₁ to C₄ alkyl esters of methacrylic acid, and vinylidene halides;
   (2) one or more water soluble carboxylic acids of the formula: 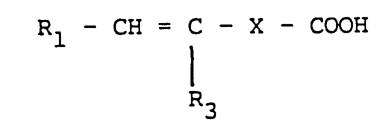 wherein R is hydrogen or carboxyl; R₃ is hydrogen, methyl, or carboxyl; and X is a covalent bond or - CH₂ -; and
   (3) A member selected from the group consisting of:
      (a) one or more water soluble hydroxy esters of the formula: 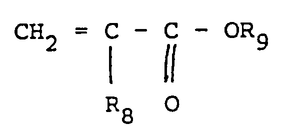 wherein R₈ is hydrogen or methyl, and R₉ is 2-hydroxyethyl or 3-hydroxypropyl; and
      (b) one or more water soluble amides of the formula: 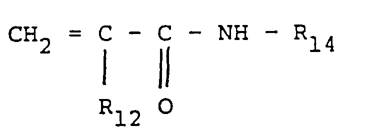 wherein R₁₂ is hydrogen or methyl and R₁₄ is hydrogen, methyl or ethyl.

## Claims

1. A surfactantless latex comprising the product of copolymerization, in aqueous medium, in the absence of any surfactant, of a mixture comprising:
1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 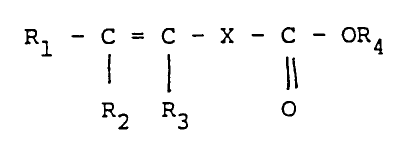 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
(3) a member selected from the group consisting of:
(a) one or more water soluble hydroxy esters, different from said carboxylic acid comonomer and of the formula: 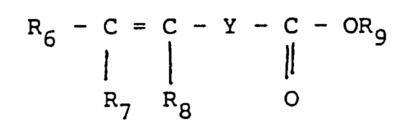 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(b) one or more water soluble amides of the formula: 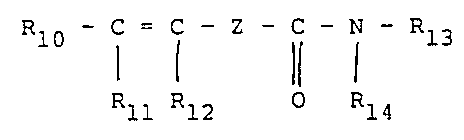 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.

2. A process for preparing a surfactantless latex comprising copolymerizing, in aqueous medium, in the absence of any surfactant, a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 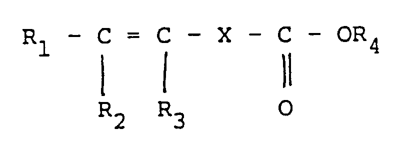 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
(3) a member selected from the group consisting of:
(a) one or more water soluble hydroxy esters, different from said carboxylic acid and of the formula: 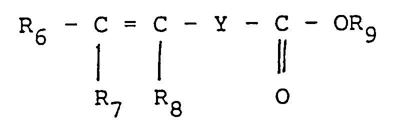 wherein R₆, R₇, and R₈ are independently selected from the group consisting of hydrogen, halogen, nitro, amino, and organic radicals; R₉ is an organic radical having at least 2 carbon atoms; with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(b) one or more water soluble amides of the formula: 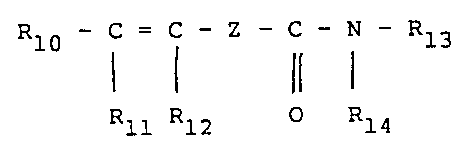 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
said one or more hydrophobic comonomers being present in said mixture in an amount of about 30% to 80%, by weight of total monomers.

3. A process for preparing a binder for paints comprising:
(a) copolymerizing, in aqueous medium, in the absence of any surfactant, a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 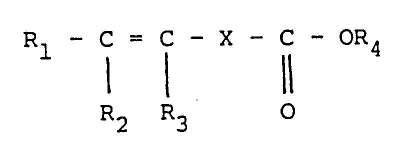 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group;
and
(3) a member selected from the group consisting of:
(i) one or more water soluble hydroxy esters, different from said carboxylic acid and of the formula: 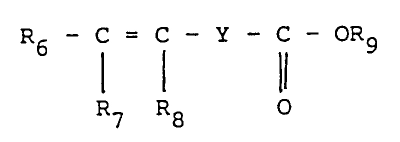 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(ii) one or more water soluble amides of the formula: 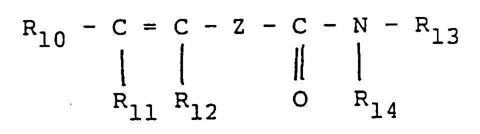 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
(b) admixing the resulting surfactantless latex with a copolymer emulsion, the copolymer of said emulsion being different from the copolymer of said surfactantless latex, the copolymer of said surfactantless latex being present in the admixture in an amount of about 2% to 20%, by weight of total polymers.

4. In a latex paint comprising:
(a) a coalescing aid,
(b) a thickening aid,
(c) a dispersing aid,
(d) a defoamer,
(e) a biocide,
(f) a filler, and
(g) a binder,
the improvement wherein said binder comprises the latex of claim 1.

5. A surfactantless latex comprising the product of copolymerization, in aqueous medium, in the presence of a pre-formed aqueous solution copolymer, and in the absence of any surfactant, of a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 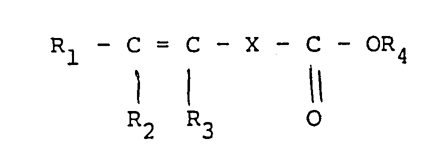 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
(3) a member selected from the group consisting of:
(a) one or more water soluble hydroxy esters, different from said carboxylic acid and of the formula: 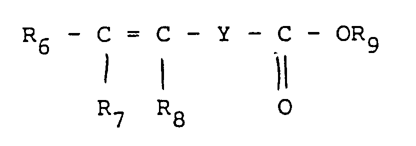 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(b) one or more water soluble amides of the formula: 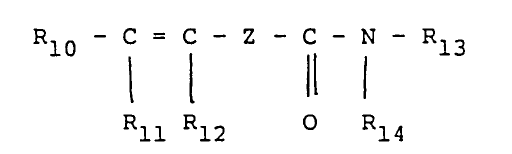 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.

6. A process for preparing a surfactantless latex comprising copolymerizing, in aqueous medium, in the presence of a pre-formed aqueous solution copolymer, and in the absence of any surfactant, a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 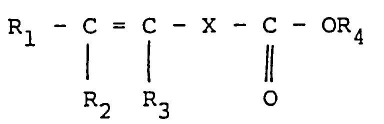 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is other than hydrogen or an organic radical containing a carboxyl group, at least one of R₁, R₂, and R₃ must contain a carboxyl group; and
(3) a member selected from the group consisting of:
(a) one or more water soluble hydroxy esters, different from said carboxylic acid comonomer and of the formula: 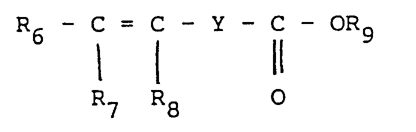 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(b) one or more water soluble amides of the formula: 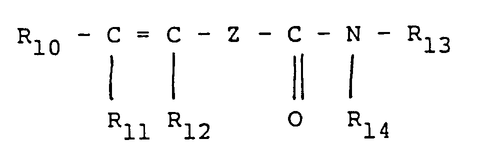 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical;
said one or more hydrophobic comonomers being present in said mixture in a proportion of about 30% to 80%, by weight of total monomers.

7. A process for preparing a binder for paints comprising:
(a) copolymerizing, in aqueous medium, in the presence of a pre-formed aqueous solution copolymer, and in the absence of any surfactant, a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 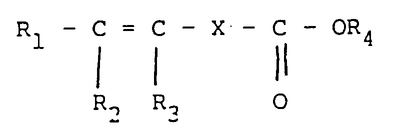 wherein R₁, R₂, and R₃ are independently selected from the group consisting of hydrogen, halogen, nitro, amino, and organic radicals; R₄ is hydrogen or an organic radical; and X is a covalent bond or an organic radical, provided that, where R₄ is other than hydrogen or an organic radical containing a carboxyl group, at least one of R₁, R₂, and R₃ must contain a carboxyl group; and
(3) a member selected from the group consisting of:
(i) one or more water soluble hydroxy esters, different from said carboxylic acid and of the formula: 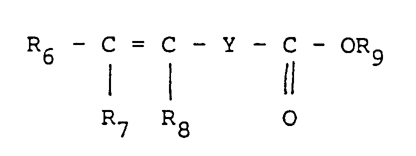 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(ii) one or more water soluble amides of the formula: 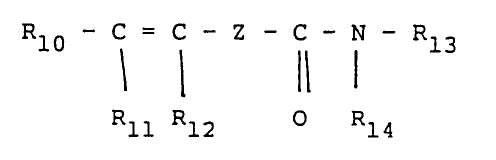 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical; and
(b) admixing the resulting surfactantless latex with a copolymer emulsion, the copolymer of said emulsion being different from the copolymer of said surfactantless latex, the copolymer of said surfactantless latex being present in the admixture in an amount of about 2% to 20%, by weight of total polymers.

8. A surfactantless latex comprising the product of copolymerization, in aqueous medium, in the absence of any surfactant, of a mixture comprising:
1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble dicarboxylic acids of the formula: 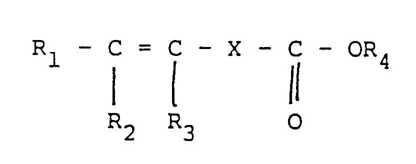 wherein R₁, R₂, and R₃ are independently selected from the group consisting of hydrogen, halogen, nitro, amino, and organic radicals; R₄ is hydrogen or an organic radical; and X is a covalent bond or an organic radical; provided that, where R₄ is hydrogen or an organic radical containing a carboxyl group, one of R₁, R₂, and R₃ must contain a carboxyl group, and, where R₄ is other than hydrogen or an organic radical containing a carboxyl group, two of R₁, R₂, and R₃ must contain carboxyl groups; and
(3) a member selected from the group consisting of:
(a) one or more water soluble hydroxy esters, different from said carboxylic acid comonomer and of the formula: 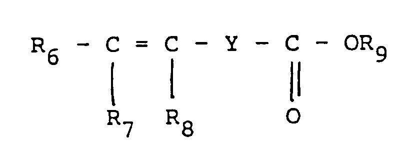 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(b) one or more water soluble amides of the formula: 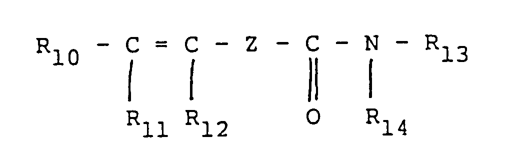 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.

9. A surfactantless latex comprising the product of copolymerization, in aqueous medium, in the absence of any surfactant, of a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids selected from the group consisting of acrylic acid, methacrylic acid, itaconic acid, maleic acid, fumaric acid, methyl or ethyl substituted itaconic acids, methyl or ethyl substituted maleic acids, methyl or ethyl substituted fumaric acids, C₁ to C₅ semi-esters of itaconic acid, C₁ to C₅ semi-esters of maleic acid, and C₁ to C₅ semi-esters of fumaric acid; and
(3) a member selected from the group consisting of:
(a) one or more water soluble hydroxy esters selected from the group consisting of hydroxy alkyl esters of acrylic acid, hydroxy alkyl esters of methacrylic acid, hydroxy cycloalkyl esters of acrylic acid, and hydroxy cycloalkyl esters of methacrylic acid; and
(b) one or more water soluble amides selected from the group consisting of acrylamide, methacrylamide, secondary methyl or ethyl amides of acrylic acid, and secondary methyl or ethyl amides of methacrylic acid.

10. A surfactantless latex comprising the product of copolymerization, in aqueous medium, in the absence of any surfactant, of a mixture comprising:
1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 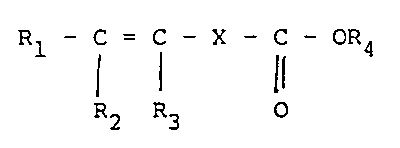 wherein R₁, R₂, and R₃ are independently selected from the group consisting of hydrogen, halogen, nitro, amino, and organic radicals; R₄ is hydrogen or an organic radical; and X is a covalent bond or an organic radical, provided that, where R₄ is other than hydrogen or an organic radical containing a carboxyl group, at least one of R₁, R₂, and R₃ must contain a carboxyl group;
(3) one or more water soluble hydroxy esters, different from said carboxylic acid and of the formula: 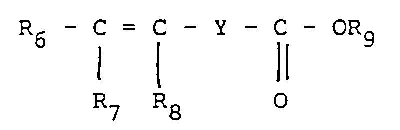 wherein R₆, R₇, and R₈ are independently selected from the group consisting of hydrogen, halogen, nitro, amino, and organic radicals; R₉ is an organic radical having at least 2 carbon atoms, with at least one of R₆, R₇, R₈, and R₉ being an organic radical having a hydroxyl substituent thereon, said hydroxyl substituent being at least 2 carbon atoms away from the nearest carboxylate group; and Y is a covalent bond or an organic radical; and
(4) one or more water soluble amides of the formula: 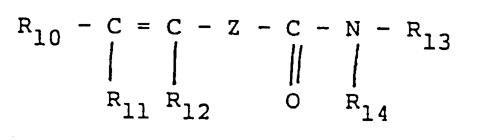 wherein R₁₀, R₁₁, and R₁₂ are independently selected from the group consisting of hydrogen, halogen, nitro, amino, and organic radicals; R₁₃ and R₁₄ are hydrogen or organic radicals having no more than 6 carbon atoms; and Z is a covalent bond or an organic radical.

11. A surfactantless latex comprising the product of copolymerization, in aqueous medium, in the absence of any surfactant, of a mixture comprising:
(1) one or more hydrophobic comonomers selected from the group consisting of C₁ to C₄ alkyl esters of acrylic acid, C₁ to C₄ alkyl esters of methacrylic acid, and vinylidene halides;
(2) one or more water soluble carboxylic acids of the formula: 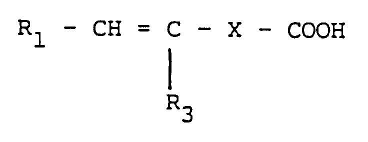 wherein R is hydrogen or carboxyl; R₃ is hydrogen, methyl, or carboxyl; and X is a covalent bond or - CH₂ -; and
(3) A member selected from the group consisting of:
(a) one or more water soluble hydroxy esters of the formula: 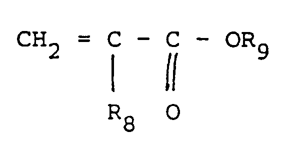 wherein R₈ is hydrogen or methyl, and R₉ is 2-hydroxyethyl or 3-hydroxypropyl; and
(b) one or more water soluble amides of the formula: 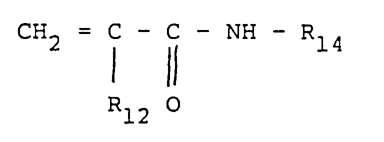 wherein R₁₂ is hydrogen or methyl and R₁₄ is hydrogen, methyl or ethyl.
